# EUROPÄISCHE PATENTSCHRIFT

(11) **EP 0 558 969 B1**
(45) Veröffentlichungstag und Bekanntmachung des Hinweises auf die Patenterteilung: **17.05.2000**
(21) Anmeldenummer: 93102127.3
(22) Anmeldetag: 11.02.1993
(51) Int. Cl.: C09D 1/02, C04B 28/26, B32B 13/00

(54) **Verbundwerkstoff, Verfahren seiner Herstellung und seine Verwendung**
Composite, process of its production and its use
Matériau composite, procédé de production et son utilisation

(30) Priorität: 15.02.1992 DE 4204583
(43) Veröffentlichungstag der Anmeldung: 08.09.1993
(73) Patentinhaber: MODERN ECOLOGICAL PRODUCTS A.G., CH-6300 Zug (CH)
(72) Erfinder: Giesemann, Herbert, CH-6914 Lugano-Carona (CH)
(74) Vertreter: Werner, Hans-Karsten, Dr.Dipl.-Chem.

(56) Entgegenhaltungen:
- DE-A- 2 627 504
- DE-B- 1 282 215
- DE-B- 1 471 005
- DE-B- 2 061 105
- DE-B- 2 460 543
- DE-B- 2 732 387
- US-A- 3 002 857
- SOVIET INVENTIONS ILLUSTRATED, Week 20, 30 May 1986, AN 86-130604/20 Derwent Publications Ltd., London, GB

## Beschreibung

Gegenstand der vorliegenden Erfindung ist ein brandfester, biegezugfester und beliebig geformter Verbundwerkstoff, das Verfahren seiner Herstellung und seine Verwendung.

Es ist seit langem bekannt, Bauplatten vor der Einwirkung eines Brandes oder hoher Temperaturen dadurch zu schützen, daß man deren Oberfläche mit Anstrichen aus Alkalisilikaten versieht, die gegebenenfalls auch fein zerteilte Füllstoffe wie Schiefermehl (DE-B-11 98 271) oder andere Mineralmehle (DE-B-14 71 020, DE-A-35 12 515) enthalten. Ebenfalls bekannt ist die Verwendung von Brandschutzplatten aus Alkalisilikaten, die hergestellt werden, indem man die Silikatfasern in eine Schicht einer Silikatlösung einbettet, gegebenenfalls auch Versteifungen aus Metalldraht einbringt und die Schicht anschließend durch Wasserentzug bei erhöhten Temperaturen verfestigt (DE-B-14 71 005). In beiden Fällen ist der Wassergehalt dieser Platten noch so hoch, daß im Brandfall eine Wasserglasschaumschicht entstehen kann, die die Hitze von der Unterstruktur fernhält. Damit sind diese Platten jedoch - bedingt durch ihren Wassergehalt - nicht wetter- und biegezugfest. Sie müssen bei Verwendung an Außenflächen durch Schutzüberzüge gegen den Einfluß von Wasser geschützt werden.

Wasserfreie Beschichtungen, die gegen chemische, thermische und, mechanische Beanspruchungen beständig sind, werden in DE-A-34 10 844 beschrieben. So offenbart diese Schrift eine Beschichtungsmasse aus Wasserglas, Quarz, Tonerde, Lavalit, Magnesiumsilikat, Bimsstein, Zement und Wasser, die ebenfalls auf die zu beschichtenden Gegenstände, wie Tankbehälter, Wasseraufbereitungsanlagen, Rohrleitungen, Schiffe, Betonbauten und andere, aufgebracht wird und nach dem Anhärten einer Flammschmelzbehandlung bei einer Temperatur von 400 bis 1.900°C unterworfen wird.

Die DE-B-27 32 387 beschreibt ein Verfahren zur Herstellung von Isolierbauplatten, bei dem eine mit einem organischen Bindemittel vorgebundene Mineralfaserplatte mit einer Dichte von 0,2 g/cm³ mit einer wäßrigen Aufschlämmung eines Bindetons durchtränkt wird. Anschließend wird bei Temperaturen über 105°C getrocknet und oberhalb 400°C getempert. Die Temperatur liegt dabei unterhalb der Transformationstemperatur der verwendeten Mineralfaser. Bei diesem Verfahren wird von einer Mineralfaserplatte mit möglichst hoher Dichte ausgegangen, um entsprechende Festigkeitseigenschaften zu erreichen. Somit hat dieses Verfahren den Nachteil, daß mechanische Festigkeit durch hohen Materialdichte-einsatz erreicht werden muß.

Die DE-B-12 82 215 beschreibt ein aushärtendes Überzugsmittel auf der Basis wäßriger Kaliumsilikatlösung mit Siliciumdioxidpulver, welches obendrein Talk und Nephelinsyenit enthält. Dieses Überzugsmittel wird nicht zum Imprägnieren benutzt, sondern nur zum Auftragen einer aushärtenden Schicht. Diese Schicht wird nur getrocknet und nicht getempert, so daß sie zwar gegen sehr hohe Temperaturen widerstandsfähig ist, jedoch nicht wasserfest ist. Imprägniert werden dabei Papier, Metalle oder Keramik, welche nicht von dem Material durchdrungen werden. Die Produkte sind somit nicht biegezugfest, sondern spröde und brüchig.

Die DE-B-24 60 543 beschreibt einen Kleber bzw. eine Beschichtungsmasse auf Basis von Wasserglas und einem Zusatz an mineralischen Stoffen, wobei insbesondere tonmineralische Stoffe, Oxide und Carbonate der Erdalkalien, des Zinks, des Aluminiums oder Bariums vorhanden sein sollen. Auch diese Kleber bzw. Beschichtungsmassen werden nur getrocknet und nicht getempert. Sie sind daher nicht wasserfest und weisen die gleichen Nachteile auf wie die Produkte gemäß DE-B-12 82 215. Sie bilden ebenfalls nur einen Film, führen aber nicht zu einem biegezugfesten Verbundmaterial.

Die DE-A-26 27 504 beschreibt ein mineralisches Bindemittel aus Alkalisilikat mit Rotschlamm als Füllstoff und die Ummantelung eines Polystyrolschaumstoff-Formkörpers mit diesem Bindemittel. Die so erhaltenen Produkte waren nicht zugfest. Auch diese Beschichtungen sind nicht getempert worden und waren daher nicht wasserfest. Dabei ist zu beachten, daß bei den Temperaturen des Temperns Polystyrolschaum oder Polyurethanschaum aufschmelzen und damit ihre die Biegezugfestigkeit erhöhende Eigenschaft völlig verlieren. Die Beispiele gehen nur von Polystyolschaumstoffkörpern aus, die mit der dickstreichfähigen Zusammensetzung ummantelt werden. Beim Erhitzen schmilzt der Polystyrolschaumstoff zusammen, so daß letztlich Hohlkörper aus dem erhärteten Material entstehen. Derartige Hohlkörper sind aber in keinem Fall biegezugfest.

Die Derwent-Zusammenfassung der SU-A-592239 beschreibt ebenfalls einen mit feuerfestem Material bestrichenen Papierkarton. Es handelt sich somit wiederum um eine nur luftgetrocknete und nicht getemperte feuerfeste Beschichtung von Karton. Da das Material nicht getempert wurde, war es auch nicht wasserfest.

Bei den bisher bekannten technischen Lösungen des Problems Brandschutz von Bauteilen werden somit stets nur Verkleidungen oder Beschichtungen der zu schützenden Gegenstände vorgeschlagen.

Der Erfindung liegt das technische Problem zugrunde, einen neuen Werkstoff zu entwickeln, mit dem feuerfest gebaut werden kann, der biegezugfest und auch wetterfest ist, der in beliebiger Form hergestellt und zu selbsttragenden, eigenstabilen Formkörpern verbaut werden kann. Der Werkstoff soll umweltfreundlich und aus leicht zugängigen Rohstoffen herstellbar sein. Auf alle Fälle muß er auch wiederverwendbar sein (recyclierbar). Insbesondere soll er keine Fasern, insbesondere Asbestfasern oder Giftstoffe oder Giftgase in die Umwelt entlassen, wie z. B. Dioxine, Furane oder Formaldehyd. Er sollte höchstmögliche Ökonomie ermöglichen bezüglich Materialaufwand im Verhältnis zur mechanischen Leistung (entsprechend den Vorbildern der Natur) und mit geringem Aufwand an Energie produzierbar sein. Er sollte möglichst große Resistenz im Verhältnis zu aggressiven Belastungen der Umwelt, wie saurer Regen, Wasser, Wasserdampf, saure und alkalische Chemikalien, UV-Strahlen, Schädlinge der Fauna und Flora aufweisen, um eine möglichst lange Haltbarkeit zu erreichen. Schließlich sollte er eine möglichst hohe Dauertemperaturbelastbarkeit, Unentflammbarkeit, keine Rauchbildung, kein Abschmelzen, keine Abgabe von toxischen Gasen und damit höchste Brandfestigkeit besitzen.

Dieses technische Problem wird gelöst durch einen Verbundwerkstoff gemäß Anspruch 1. Bevorzugte Ausführungsformen sind Gegenstand der Ansprüche 2 und 3.

Es ist auch möglich, als vorgeformtes Verstärkungsmaterial mit Alkaliwasserglas verklebte Fasern aus verschiedensten Materialien oder mit Wasserglas verklebte Drahtstückchen zu verwenden.

Die zweite Komponente des Verbundwerkstoffes ist entweder Alkaliwasserglas oder Alkaliwasserglas vermischt mit einem feindispersen mineralischen Füllstoff, wie zum Beispiel Aluminiumoxid, Siliciumdioxid, Zirkoniumdioxid, Titandioxid, Graphit, Rotschlamm, Quarzmehl, Tonerdezement, Kaolin oder ein Gemisch davon. Dabei ist Rotschlamm als Abfallprodukt der Aluminiumproduktion besonders kostengünstig. Neben diesen aufgeführten Beispielen können im Rahmen der Erfindung alle dem Fachmann bekannten mineralischen Füllstotfe mit Schmelzpunkten oberhalb 1.300°C, vorzugsweise über 1.800°C, oder deren Gemische eingesetzt werden. Weiterhin ist es möglich, einen Teil des Füllstoffes zu ersetzen durch schwer recyclierbare Abfälle, wie PVC-Pulver und/oder PVC-Granulate aus Abfällen. Die Korngrößen der Füllstoffe sollen für die Zwecke der Erfindung zwischen 1 bis 30 µm liegen, die Füllstoffe müssen frei von Verunreinigungen sein, und sie müssen mit der wäßrigen Alkaliwasserglaslösung intensiv vermischt werden. Als Alkaliwasserglas wird Natrium- und/oder Kaliumwasserglas mit einer Dichte von 35 - 40 Baumé-Graden eingesetzt.

Von großer praktischer Bedeutung für die Verarbeitbarkeit ist die Viskosität dieser Wassergläser bzw. der Suspensionen von Füllstoff in den Wassergläsern, wobei auch auf vollständige Benetzung der Füllstoffteilchen zu achten ist. Da sich die Viskosität durch Temperaturerhöhung senken läßt, kann die Verarbeitung bel erhöhten Temperaturen vorteilhaft sein. Die so erhaltenen Verbundkörper weisen bevorzugt Materialstärken von 2 bis 4 mm auf.

Gegenstand der Erfindung ist weiterhin das Verfahren zur Herstellung des Verbundwerkstoffes gemäß Anspruch 4, das die Eigenschaften des Werkstoffes wesentlich mit beeinflußt. Im folgenden wird die Herstellung des erfindungsgemäßen Verbundwerkstotfes näher beschrieben.

Der Verbundwerkstoff wird hergestellt, indem das vorgeformte Verstärkungsmaterial mit wäßriger Natrium- und/oder Kaliumwasserglaslösung mit einem Wasseranteil von 5 bis 30 Gew.-% ein- oder allseitig beschichtet und/oder imprägniert wird, dann bel Temperaturen von 90 bis 105°C getrocknet und danach bel Temperaturen von 400 bis 700°C getempert wird. Auf diese Art und Weise werden biegezugfeste, bis ca. 800°C temperaturbelastbare und völlig wasserfreie Verbundwerkstoffe erhalten, da durch das erfindungsgemäße Tempern auch das chemisch gebundene Wasser entfernt wurde. Solche Verbundwerkstoffe sind somit wetterfest und als Bauelemente auch an Außenflächen anwendbar. Wird zum Beispiel ein Wirrfaservlies oder ein Glasgewebe mit wäßriger Natriumsilikatlösung beschichtet, so erhält man nach Trocknung und Temperung eine stabile, transparente, nur 2 - 4 mm starke Platte.

Verbundwerkstoffe die bis 1.600°C hitzebeständig sind, werden erhalten, wenn das vorgeformte Verstärkungsmaterial mit einer Suspension aus 90 bis 10 Gew.-% wäßriger Alkaliwasserglaslösung und 10 bis 90 Gew.-% feindispersem mineralischen Füllstoff beschichtet und/oder imprägniert wird.

Die durch Beschichten oder Imprägnieren mit der anorganischen Suspension und Trocknen erhaltenen Verbundwerkstoffe werden nachfolgend bei 400 bis 700°C getempert, so daß man Verbundwerkstoffe erhält mit guten Druck-, Zug-, und Biegezugfestigkeiten, die bis 1.600°C hitze- und formbeständig und daneben wasserfrei sind. Sie halten sowohl kurzzeitige Hitzebelastungen in einem Brandfall (1.200°C), als auch Dauerbelastungen mit 1.200 bis 1.600°C aus, d. h. sie sind hochfeuerbeständig. Die erfindungsgemäßen Verbundwerkstoffe weisen somit neben den guten mechanischen Eigenschaften die vorteilhaften Eigenschaften keramischer Werkstoffe, wie Unbrennbarkeit, Resistenz gegen Chemikalien, UV-Strahlen, tierischen und pflanzlichen Schädlingen auf. Daneben sind die erhaltenen Verbundwerkstoffe umweltfreundlich und aus leicht zugängigen Rohstoffen herstellbar.

Das verfahrensgemäße Beschichten und/oder Imprägnieren der vorgeformten Verstärkungsmaterialien mit der Alkaliwasserglaslösung oder der Suspension kann mit allen üblichen, dem Fachmann bekannten Methoden, zum Beispiel durch Aufrakeln, Bestreichen oder Besprühen durchgeführt werden. In der einfachsten Variante wird das vorgeformte Material in die Alkaliwasserglaslösung oder die Suspension getaucht. Die Beschichtung kann je nach Verwendungszweck ein- oder allseitig erfolgen. Zur Erzielung beliebig dicker Beschichtung/Imprägnierungen können Beschichten, Imprägnieren und Trocknen auch ein- oder mehrmals ohne Füllstoff oder auch mit verschiedenen Konzentrationen an Füllstoff in der Suspension wiederholt werden. Es lassen sich so auch Verbundwerkstoffe herstellen, deren Verstärkungsmaterialien zunächst mit der Alkaliwasserglaslösung beschichtet oder imprägniert und danach bei 90 bis 105°C getrocknet werden, dann mit der Suspension beschichtet/imprägniert, bei 90 bis 105°C getrocknet und bei 400 bis 700°C getempert werden.

Bei der Wiederholung des Beschichtens/Imprägnierens lassen sich auch gleichzeitig weitere zugfeste Verstärkungsmaterialien, zum Beispiel Matten aus Glas, Seidengewebe oder Glasvlies, aber auch Metallfolien einarbeiten. Somit sind auch Verbundwerkstoffe aus zwei und mehr ersten vorgeformten Verstärkungsmaterialien herstellbar, wobei dabei Verstärkungsmaterialien der gleichen Art, also zum Beispiel nur organische oder nur anorganische Materialien, oder auch unterschiedliche Materialien kombinierbar sind, die nach Beschichten/Imprägnieren mit der Alkaliwasserglaslösung oder der Suspension und Übereinanderlegen vor dem Trocknen und Tempern mit leichtem Druck verpreßt werden.

Das Trocknen der erfindungsgemäßen Verbundwerkstoffe kann zum Beispiel in einem Trockenofen, in einer Mikrowelle oder durch Infrarotbestrahlung erfolgen. Die Trocknungszeit beträgt durchschittlich 5 bis 20 Minuten, je nach Wassergehalt der Alkaliwasserlösung bzw. nach Füllstoffkonzentration.

Die Herstellung des erfindungsgemäßen Verbundwerkstoffes kann auch in der Weise erfolgen, daß nach dem Beschichten oder Imprägnieren des vorgeformten Materials kurzzeitig getrocknet wird, um nur etwas freies Wasser zu entfernen, dann das Material nochmals geformt und anschließend endgültig getrocknet und gegebenenfalls getempert wird.

Das Tempern bei 400 bis 700°C erfolgt kurzzeitig zwischen 10 bis 60 Sekunden. Einige der erfindungsgemäß benutzten Verstärkungsmaterialien, wie Kunststoffe, schmelzen dabei zusammen, ohne Gase oder Qualm abzugeben, weil durch die gasdichte Imprägnierung mit dem anorganischen Medium kein Sauerstoff zur Verbrennung an den Kunststoff gelangen kann.

Die durch die Form des Verstärkungsmaterials mitbestimmte endgültige Form der Verbundwerkstoffe reicht von ebenen Platten über gekrümmte, gefaltete oder verdrillte Flächen bis zu Rund- oder Profilrohren.

Es hat sich gezeigt, daß sich für eine kontinuierliche Produktion der erfindungsgemäßen Verbundwerkstoffe in Plattenform die bekannten Beschichtungsanlagen für Kunststoffgewebebahnen in ihrer Produktionstechnologie eignen. Es ist lediglich eine Erweiterung der Produktionsstrecke um einen Trockenofen, in dem 400 bis 700 °C erzeugt werden können, notwendig.

Die erfindungsgemäßen Verbundwerkstoffe finden in den verschiedensten Bereichen als brand- und biegezugfeste Bauelemente Anwendung. So können die erfindungsgemäß hergestellten großflächigen Bauelemente zum Beispiel als sogenannte abgehängte Decken in gewerblichen und industriellen Gebäuden eingesetzt werden. Neben der Brandsicherheit müssen diese Bauelemente eine hohe Eigensteifigkeit und ein niedriges spezifisches Gewicht besitzen.

Werden nach dem erfindungsgemäßen Verfahren Gewebe wie Tischtücher, Zeltplanen, Kunststoffgewebe oder ähnliches mit dem anorganischen Medium beschichtet, so entstehen biegezugfeste, dünne, unbrennbare Platten, die im Innenausbau als Wandverkleidungen oder auch Fußbodenbeläge eingesetzt werden können.

Es lassen sich auch erfindungsgemäß hergestellte Verbundwerkstoffe in Plattenform zu verschiedenen Bauelementen zusammenfügen, indem man die Suspensionen zusammenfließen läßt und danach trocknet und tempert, so daß keine "Schweißnaht" an den Bauelementen erkennbar ist.

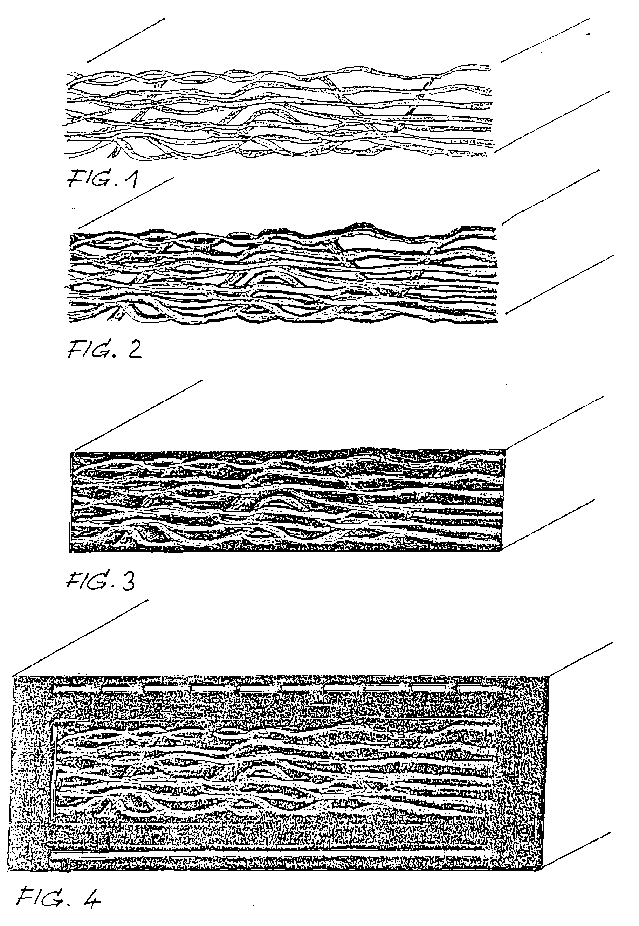

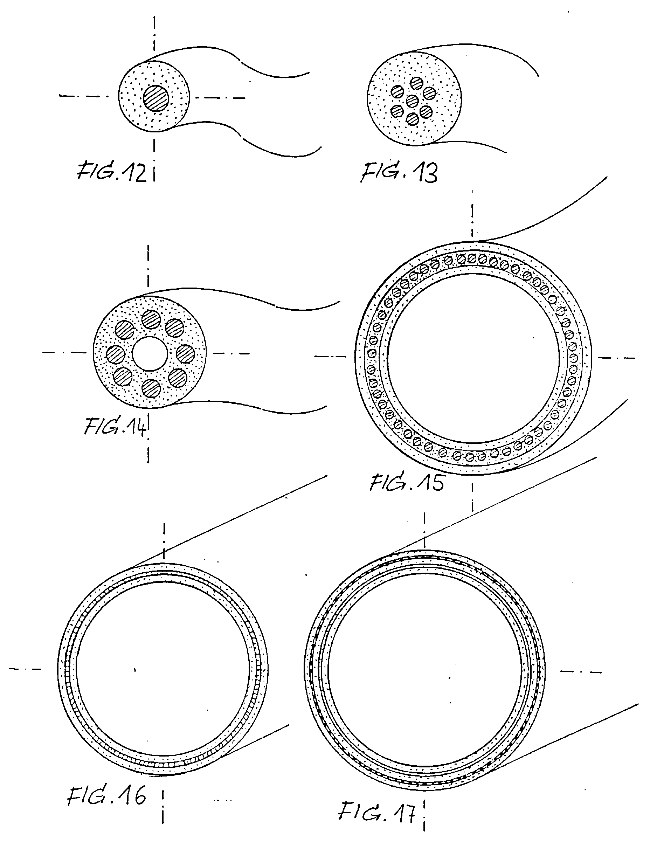

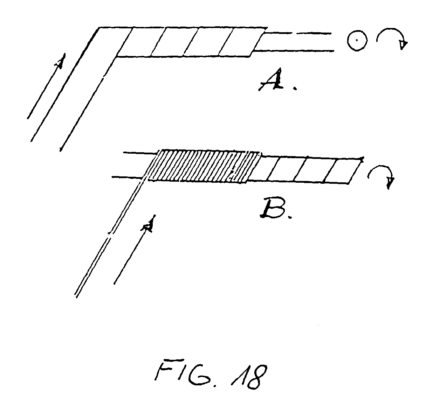

Die folgenden Beispiele sind bevorzugte Ausführungsformen und zeigen in Verbindung mit den Figuren 1 bis 17 mögliche Anwendungen der Erfindung auf.

### Beispiel 1: Ebene Platte

Man nimmt ein Wirrfaservlies mit einer Stärke von 1 mm und einem Ausmaß von 1,0 / 1,0 m, die Fasercharakteristik ist in Figur 1 dargestellt. Alle Fasern setzen sich meist aus zahlreichen einzelnen Fasern von einer Stärke von 1 - 20 µm verdrillt zusammen. Dieses Vlies wird in eine Natriumsilikatlösung Bé 37 mit einem niedrigen Wassergehalt von 20 - 30 Gew.-% für einige Sekunden getaucht, danach herausgenommen und in einem Ofen bei 90 bis 100°C getrocknet. Das Vlies zeigt nun eine erhebliche Gewichtsvergrößerung, weil die Lösung in die Zwischenräume der zahlreichen Innenfasern des Vlieses aufgenommen wurde (Figur 2). Damit ist das Vlies erheblich in den mechanischen Festigkeiten, besonders der Druckfestigkeit verstärkt worden. Nachfolgend wird diese Faserplatte in eine Suspension folgender Zusammensetzung eingetaucht:
50 Gew.-% Natriumsilikat
40 Gew.-% Aluminiumoxid
10 Gew.-% Wasser.

Nach dem Herausnehmen läuft noch ein geringer Teil der Suspension ab und die Platte wird wieder in einem Ofen wie oben getrocknet. Nach dem Trocknen ist diese Platte völlig eigenstabil. Je nachdem, wie groß die Zwischenräume zwischen den Hauptfasern sind und je nach der Viskosität der Suspension, sind alle Zwischenräume zwischen diesen Fasern ausgefüllt. Ist das nicht der Fall, werden Imprägnierung und Trocknung nochmals wiederholt, gegebenenfalls mit einer viskoseren Suspension.

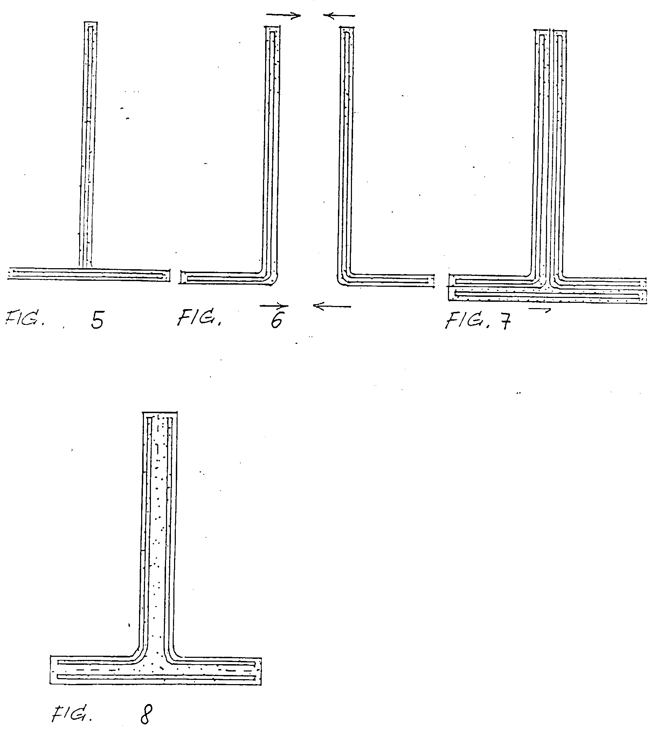

Die Platte hat auf allen Seiten eine durchgehende geschlossene, dichte Oberfläche, enthält aber noch Reste von chemisch gebundenem Wasser. Um diese letzten Reste noch auszutreiben, wird anschließend die Platte im Ofen einer Temperaturbehandlung von 400°C unterzogen. Damit verdunsten die letzten Reste Wasser, die Platte ist völlig wasserfrei, damit hart und stabil und wasserunlöslich (Figur 3). Diese Wasserfestigkeit ist für die Anwendung für Gebäudeverkleidungen im Außenbereich wichtig.

Soll diese Platte eine noch stärkere Eigenstabilität aufweisen und auch die Feuerwiderstandsfähigkeit erhöht werden, kann sie nochmals ein- oder mehrseitig mit einer Schicht von zum Beispiel 0,5 mm Stärke dieser Suspension überzogen, getrocknet und getempert werden, gegebenenfalls lassen sich dabei auch weitere zugfeste Verstärkungsmaterialien wie Folien, Bleche oder perforierte Folienbleche einarbeiten (Figur 4).

### Beispiel 2: T-Stück

Auf ein Metallblech 1,05 m / 1,05 m mit seitlichen Aufbördelungen, die Oberfläche ist mit PTFE beschichtet, werden Glasfasern - E - Glas- oder S-Glasfasern - in Länge von 2 - 200 mm und in Stärken von z. B. 0,001 bis 0,5 mm derart aufgeschichtet, daß die Fasern in einer Schicht nach allen Richtungen orientiert sind. Auf diese Schicht werden gegebenenfalls weitere 2 - 4 Schichten aufgebracht. Danach wird ein Stahldrahtgewebe 1,05 / 1,05 m, dessen Drähte ebenfalls mit PTFE beschichtet sind, darüber gelegt als Schutz vor einem Verwirbein bei dem nachfolgenden Besprühen durch Düsen mit wäßriger Natriumsilikatlösung. Nach dieser durchgehenden Benetzung wird die Platte kurzzeitig im Ofen oder durch Infrarotbestrahlung oder durch eine Mikrowelle bei 100 °C getrocknet. Nach dieser kurzzeitigen Trocknung ist ein völlig steifes, in sich verfestigtes Gebilde entstanden, in dem alle Fasern nach allen Richtungen in verschiedenen Größen verteilt sind. Die kurzen Fasern, zum Beispiel die von 2 - 3 mm Länge können und sollen sogar innerhalb des Gebildes (whiskerartig) senkrecht stehen, um die späteren inneren Schubkräfte aufnehmen zu können. Je nach Faserstärke und Anzahl der Schichten wird dieses Formgebilde eine Stärke von 2 - 3 mm aufweisen.

Um die Brandfestigkeit zu erhöhen, wird diese eigenstabile Platte auf allen Seiten um 0,5 bis 1 mm mit einer Suspension gemäß Beispiel 1 beschichtet, getrocknet und getempert wie im Beispiel 1.

Ein Test der Brandfestigkeit bei einer Temperatur von 1200°C zeigt keinerlei Volumenänderung dieser Platte.

Werden zwei solche Platten senkrecht aufeinanderstehend verschweißt, so entsteht ein T-Stück (Figur 5).

Werden zwei gebogene Formkörper gemäß Figur 6 verschweißt und zusätzlich auf der unteren Seite durch eine Platte verstärkt, so entsteht ein Bauelement gemäß Figur 7.

Eine andere Möglichkeit der Herstellung eines solchen T-Stückes ist die Herstellung in einem Guß durch das Zusammenfließen der Suspensionen (Figur 8).

### Beispiel 3:

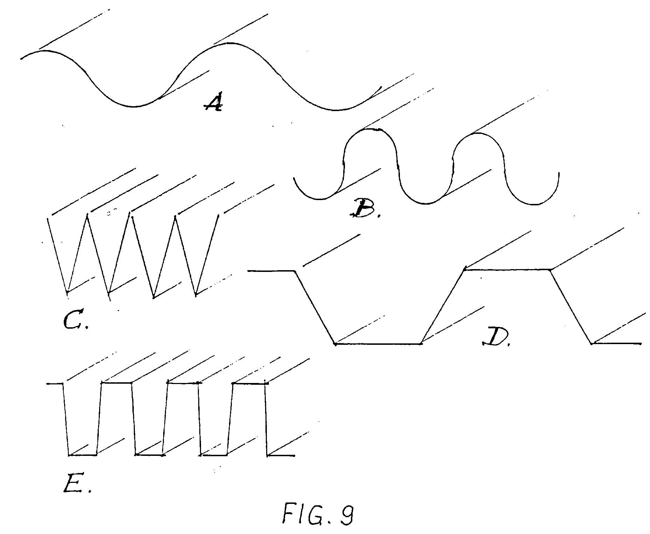

Ein Verstärkungsmaterial in Form einer Folie oder Matte wird mit einer Suspension gemäß Beispiel 1 beschichtet und danach 3 Minuten bei 85°C vorgetrocknet. Nachdem jetzt die Suspension noch genügend pastös ist, wird das beschichtete Material mit Hilfe einer Matrize, Patrize oder durch beiderseitiges kontinuierliches leichtes Pressen nach dem Zahnradprinzip in die endgültige Form gebracht, 15 Minuten bei 100°C getrocknet und 60 Sekunden bei 600°C getempert. So erhältliche, mögliche Formgebungen sind in Figuren 9 A bis E dargestellt.

### Beispiel 4: "Zick-Zack-Formkörper"

In diesem Beispiel werden organische Zellulosemedien oder Faservliese als zugfeste Verstärkungsmaterialien eingesetzt.

Kraftpapier wird mit wäßriger Natriumsilikatlösung durchimprägniert, danach bei einer Temperatur von 80 bis 100°C getrocknet und im folgenden allseitig mit einer Suspension wie in Beispiel 1 beschrieben in Stärken von vorzugsweise 0,3 bis 0,5 mm überzogen. Gegebenenfalls werden auch 2 - 4 Kraftpapierschichten imprägniert und beschichtet und unter Herausdrücken aller Luftblasen aneinandergedrückt.

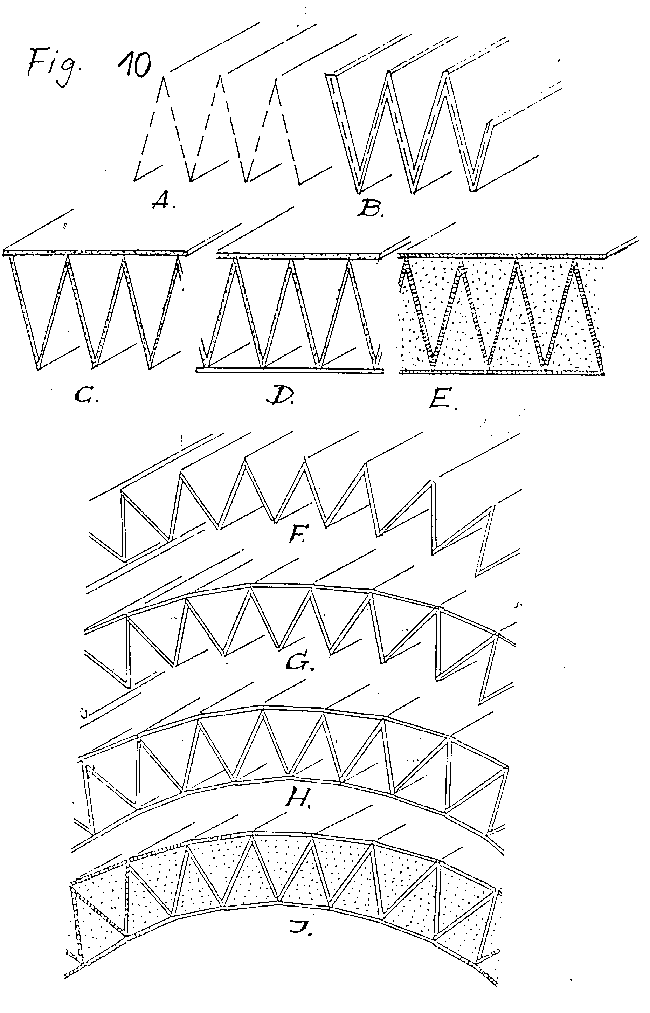

Im Durchlaufofen wird danach bei 100°C vorgetrocknet, damit mit diesem dünnen Formkörper nicht nur eine ebene Platte entstehen kann, sondern weitere Formgebungen möglich sind, so zum Beispiel ein Abknicken in wenigstens einer Richtung um 90°oder auch wie in Figuren 10B und 10F dargestellt zu einer Zick-Zack-Form. Diese Zick-Zack-Form weist in der Längsrichtung eine denkbar günstige Eigensteifigkeit bzw. Biegezufestigkeit auf. Ein solcher vorwiegend anorganischer Formkörper kann bevorzugt als abgehängte Decke in Industriehallen mit einer Länge von 10 m und mehr eingesetzt werden. Erhält nun dieser Zick-Zack-Formkörper auf einer oder auch auf beiden Seiten eine Platte mit Kraftpapierschichten, wie oben dargelegt (Figuren 10 C, D, G, H), so entstehen in sich hochstabile brandfeste Bauelemente dreidimensionaler Formkörper mit guten mechanischen Festigkeitswerten. Sie besitzen ein sehr niedriges Eigengewicht im Verhältnis zu dem gesamten Volumen und höchste Eigenstabilität. Um diese Formkörper als selbsttragende Bauelemente auch zum Kälte- oder Wärmeschutz einzusetzen, können die Hohlräume mit Dämmstoffen sehr niedriger Rohdichte ausgefüllt werden (Figuren 10 E, I).

"Zick-Zack-Formkörper" lassen sich natürlich auch unter Verwendung schon entsprechend vorgeformten Kraftpapiers (Figur 10 A) und nachfolgendem Beschichten, Trocknen und Tempern herstellen.

### Beispiel 5: "Honigwaben-Formkörper"

Honigwabenprodukte sind als Kraftpapier oder auch Recyclingpapier, aber auch aus Kunststoff und Aluminium auf dem Markt. Ökonomisch ist zweifellos das Recyclingpapier.

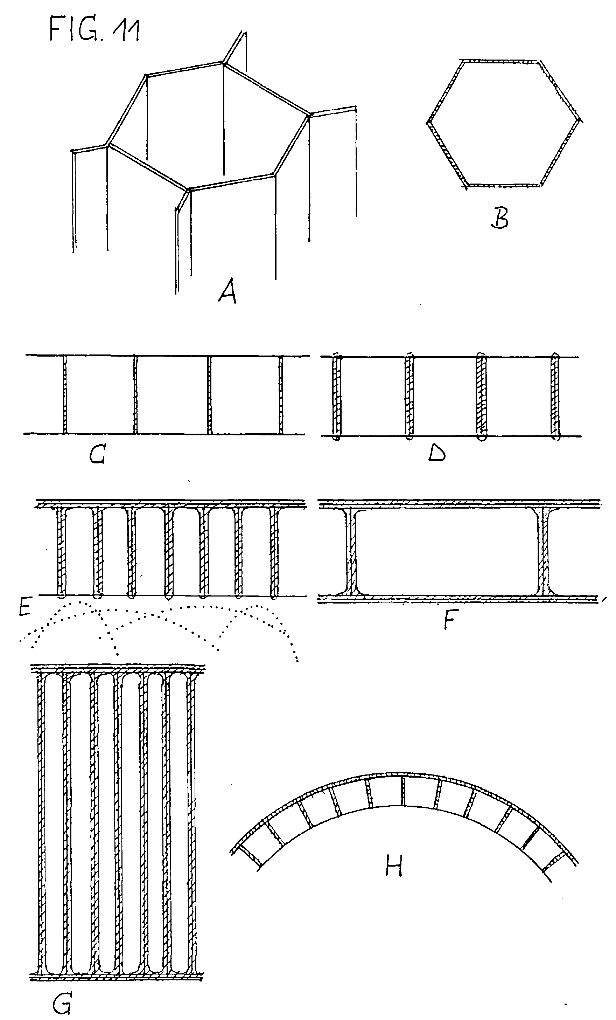

Die handelsüblichen Dimensionen haben große Variationsbreiten. Die Sechseckwaben können einen Durchmesser von 3 mm bis 100 mm haben, die Wandstärke ist stets nur 0,09 bis 0,15 mm, die Dicke kann 3 mm, aber auch bis zu 500 mm und mehr betragen (Figuren 11 A, B, C).

Eine Platte dieser Honigwaben aus Kraftpapier mit einem Wabendurchmesser von 20 mm, einer Dicke von 30 mm, Länge und Breite 1 m wird in eine Natriumsilikatlösung eingetaucht, danach zunächst bei 100°C, dann bei 400°C voll ausgetrocknet. Die Platte hat danach eine beachtliche Festigkeit (Figur 11 D). Sie wird im nächsten Schritt von einer Seite mit einer Deckschicht versehen (Figur 11 E), die aus 1 oder 2 Lagen Kraftpapier, wie nach Beispiel 4 hergestellt, besteht, und auf beiden Seiten mit einer Suspension gemäß Beispiel 1 von 0,5 mm bis 1,5 mm überzogen ist. Die Verbindung erfolgt durch Verschweißen der anorganischen Adhäsivmedien.

Durch die einseitige Anbringung des flächigen Formkörpers wird eine beachtliche Steifigkeit erzielt. Das Eigengewicht ist sehr niedrig. Anwendung findet eine solche Platte zum Beispiel bei abgehängten Decken und zwar ist die offene, zellige Seite nach unten zum Raum gerichtet. Die untere Seite absorbiert die Luftschallwellen durch die Zellstruktur mit ihren engen Wandungen (Figur 11 E).

Es können auch Honigwaben verschiedenen Durchmessers und verschiedener Dicke zusammengebaut werden.

Die Wabenzellen werden nach dem ersten Imprägnieren nochmals mit einer Suspension gemäß Beispiel 1 in Stärken von 0,5 bis 1,5 mm allseits überzogen.

Werden die Waben auf beiden Seiten mit einem flächigen Formkörper, zum Beispiel Kraftpapier, das mit einer Suspension gemäß Beispiel 1 imprägniert wurde, überzogen, so erhält man ein feuerfestes, selbsttragendes Bauelement mit leichtem Eigengewicht für große Spannweiten von 5 bis 25 m (Figuren 11 F, G) und mit Anwendungsmöglichkeiten im Bauwesen und Fahrzeugbau. Überraschend ist bei dem Einsatz der Honigwaben die Flexibilität dieser Waben in allen Richtungen (Figur 11 H). Es ist mit ihrer Hilfe möglich, die schwierigsten Bauelemente herzustellen. Solche anorganischen Formkörper sind auf diese einfache Weise zur Zeit mit keinem anderen Verfahren realisierbar.

### Beispiel 6: Stange, Röhre

Ein längliches, faserartiges Verstärkungsmaterial (zum Beispiel ein Metallseil oder ein Seil aus Sisalhanf) wird mit einer Suspension aus wäßriger Kaliumwasserglaslösung und Rotschlamm imprägniert, bei 100°C zwischen 10 bis 20 Minuten getrocknet und anschließend bei 600°C 20 Sekunden getempert. Man erhält einen bis 1400°C hitzebeständigen Verbundwerkstoff in Form einer kompakten geraden oder gebogenen Stange (Figur 12).

Setzt man als Verstärkungsmaterial mehrere verdrillte Seile ein, so erhält man nach dem beschriebenen Verfahren einen Verbundwerkstoff mit noch besserer Biegezugfestigkeit (Figur 13). Werden mehrere Seile spiralförmig um einen Zylinder gewickelt, so entsteht in der Mitte ein Hohlraum und nach Imprägnieren, Trocknen und Tempern erhält man eine Röhre (Figur 14), die man gemäß den Figuren 15 bis 17 beliebig vergrößern und/oder verstärken kann. So hält das in Figur 17 dargestellte Rohr bereits einen größeren Innendruck aus.

Eine weitere Möglichkeit zur Herstellung von Röhren besteht im spiraligen Aufwickeln eines oder mehrerer Drähte oder Bänder um einen Hilfs-Kern, der anschließend wieder entfernt wird. Die so hergestellte spiralförmige Röhre dient als vorgeformtes Verstärkungsmaterial und wird anschließend mit der Suspension beschichtet (vgl. Figur 18 A + B).

Aus diesen Beispielen ergibt sich, daß die gestellte Aufgabe hervorragend gelöst wird. Der neue Verbundwerkstoff kann dabei auch eingesetzt werden im Hochbau (insbesondere Wolkenkratzer), Bau von Fahrzeugen zu Lande, zu Wasser und in der Luft, Maschinenbau, Anlagenbau und Möbelbau.

## Patentansprüche

1. Verbundwerkstoff aus einem oder mehreren ersten vorgeformten, die endgültige Formgebung mitbestimmenden imprägnierbaren Verstärkungsmaterialien aus zugfestem organischen und/oder anorganischen Material einer Dicke von 0,5 bis 1 mm und einem zweiten, als Suspension aufgetragenen, ausgehärteten Material aus Alkaliwasserglas und einem feindispersen mineralischen Füllstoff, wobei die Aushärtung erfolgt ist durch Trocknen bei 90 bis 105°C und nachfolgendes Tempern bei 400 bis 700°C und wobei das nicht ausgehärtete Material eine Dicke von mindesten 0,5 mm aufweist und der Verbundwerkstoff eine Materialstärke von insgesamt 2 bis 4 mm aufweist und bei dem das erste vorgeformte Verstärkungsmaterial in Form von Fasern, Faserbündeln, Geweben, Faservliesen, Fasermatten, Drahtgeflechten, perforierten Folien, Blechen oder Platten oder als mit Alkaliwasserglas verklebten Fasern oder Drahtstückchen oder in gekrümmten, gefalteten oder verdrillten Formen vorliegt.

2. Verbundwerkstoff nach Anspruch 1, dadurch gekennzeichnet, daß das Alkaliwasserglas Natrium- und/oder Kaliumwasserglas ist.

3. Verbundwerkstoff nach den Ansprüchen 1 oder 2, dadurch gekennzeichnet, daß der feindisperse mineralische Füllstoff Aluminiumoxid, Siliciumdioxid, Zirconiumdioxid, Titandioxid, Graphit, Rotschlamm, Quarzmehl, Tonerdezement, Kaolin oder ein Gemisch davon ist und die Korngröße 1 bis 30 µm beträgt.

4. Verfahren zur Herstellung eines Verbundwerkstoffes mit einer Dicke von insgesamt 2 bis 4 mm aus einem oder mehreren ersten vorgeformten, die endgültige Formgebung mitbestimmenden imprägnierbaren Verstärkungsmaterialien aus zugfestem organischen und/oder anorganischen Material und einem zweiten, als Suspension aufzutragenden, aushärtbaren Material aus Alkaliwasserglas und einem feindispersen mineralischen Füllstoff, dadurch gekennzeichnet, daß das erste Material, welches eine Dicke von 0,5 bis 1 mm aufweist, vorgeformt und danach gegebenenfalls aufgerauht wird und aus Fasern, Faserbündeln, Geweben, Faservliesen, Fasermatten, Drahtgeflechten, perforierten Folien, Blechen oder Platten besteht, dann mit einer Suspension aus wäßriger Alkaliwasserglaslösung und einem feindispersen mineralischen Füllstoff ein- oder allseitig beschichtet und/oder imprägniert wird und bei Temperaturen von 90 bis 105°C getrocknet und nachfolgend bei 400 bis 700°C getempert wird, wobei ein ausgehärtetes Material mit einer Dicke von mindestens 0,5 mm entsteht.

5. Verfahren nach Anspruch 4, dadurch gekennzeichnet, daß das vorgeformte Verstärkungsmaterial zunächst mit einer Alkaliwasserglaslösung imprägniert und bei 90 bis 105°C getrocknet wird, danach mit der Suspension imprägniert, bei 90 bis 105°C getrocknet und bei 400 bis 700°C getempert wird.

6. Verfahren nach den Ansprüchen 4 oder 5, dadurch gekennzeichnet, daß die Suspension 90 bis 10 Gew.-% wäßrige Alkaliwasserglaslösung und 10 bis 90 Gew.-% feindispersen mineralischen Füllstoff enthält, wobei sich die Gewichtsprozente zu 100 Prozent ergänzen.

7. Verfahren nach den Ansprüchen 4 bis 6, dadurch gekennzeichnet, daß als Alkaliwasserglaslösung eine Natrium- und/oder Kaliumwasserglaslösung mit einem Wasseranteil von 5 bis 30 Gew.-% verwendet wird.

8. Verfahren nach den Ansprüchen 4 bis 7, dadurch gekennzeichnet, daß die Suspension als feindispersen mineralischen Füllstoff Aluminiumoxid, Siliciumdioxid, Zirconiumdioxid, Titandioxid, Graphit, Rotschlamm, Quarzmehl, Tonerdezement, Kaolin oder ein Gemisch davon enthält, dessen Korngröße zwischen 1 bis 30 µm beträgt.

9. Verfahren nach den Ansprüchen 4 bis 8, dadurch gekennzeichnet, daß zur Erzielung beliebig dicker Imprägnierungen das Imprägnieren und das Trocknen ein- oder mehrmals wiederholt werden.

10. Verwendung von Verbundwerkstoffen nach den Ansprüchen 1 bis 3 als brandfeste, biegezugfeste und beliebig geformte Bauelemente.

## Claims

1. A composite material consisting of one or more first, preshaped impregnatable reinforcing materials of an organic and/or inorganic material having a high tensile strength and a thickness of from 0.5 to 1 mm which materials codetermine the final shape, and a second, cured material, applied as a suspension, of alkali water glass and a finely dispersed mineral filler, wherein said curing has been done by drying at from 90 to 105 °C followed by annealing at from 400 to 700 °C, wherein the uncured material has a thickness of at least 0.5 mm and said composite material has a total thickness of from 2 to 4 mm, wherein said first preshaped reinforcing material is in the form of fibers, fiber bundles, fabrics, fiber fleeces, fiber mats, wire meshes, perforated sheets, metal sheets or plates, or fibers or wire pieces bonded with alkali water glass, or in bended, folded or twisted forms.

2. The composite material according to claim 1, characterized in that said alkali water glass is sodium and/or potassium water glass.

3. The composite material according to claim 1 or 2, characterized in that said finely dispersed mineral filler is alumina, silica, zirconia, titania, graphite, red mud, quartz powder, aluminous cement, china clay or a mixture thereof, and its grain size is from 1 to 30 µm.

4. A process tor the preparation of a composite material having a total thickness of from 2 to 4 mm from one or more first, preshaped impregnatable reinforcing materials of an organic and/or inorganic material having a high tensile strength which materials codetermine the final shape, and a second, curable material, to be applied as a suspension, of alkali water glass and a finely dispersed mineral filler, characterized in that said first material having a thickness of from 0.5 to 1 mm is preshaped and then optionally roughened and consists of fibers, fiber bundles, fabrics, fiber fleeces, fiber mats, wire meshes, perforated sheets, metal sheets or plates, and is subsequently coated on one or both sides thereof and/or impregnated with a suspension of an aqueous alkali water glass solution and a finely dispersed mineral filler, dried at temperatures of from 90 to 105 °C and then annealed at from 400 to 700 °C to form a cured material having a thickness of at least 0.5 mm.

5. The process according to claim 4, characterized in that said preshaped reinforcing material is first impregnated with an alkali water glass solution and dried at from 90 to 105 °C, then impregnated with said suspension, dried at from 90 to 105 °C, and annealed at from 400 to 700 °C.

6. The process according to claim 4 or 5, characterized in that said suspension contains from 90 to 10% by weight of aqueous alkali water glass solution and from 10 to 90% by weight of finely dispersed mineral filler, the sum of the two weight percentages being 100 percent.

7. The process according to claims 4 to 6, characterized in that a sodium and/or potassium water glass solution having a water content of from 5 to 30% by weight is used as said alkali water glass solution.

8. The process according to claims 4 to 7, characterized in that said suspension contains alumina, silica, zirconia, titania, graphite, red mud, quartz powder, aluminous cement, china clay or a mixture thereof having a grain size of from 1 to 30 µm as said finely dispersed mineral filler.

9. The process according to claims 4 to 8, characterized in that said impregnating and drying are repeated once or several times to achieve impregnations of any thickness desired.

10. Use of composite materials according to claims 1 to 3 as construction elements having flame resistance, tensile strength and any desired shape.

## Revendications

1. Matériau composite constitué d'un ou plusieurs premiers matériaux de renfort, préformés, pouvant être imprégnés, qui ensemble définissent la forme finale, euxmêmes constitués d'un matériau organique et/ou inorganique résistant à la traction, ayant une épaisseur de 0,5 à 1 mm, et d'un deuxième matériau durci, appliqué sous forme d'une suspension, constitué d'un silicate de métal alcalin et d'une matière de charge minérale finement dispersée, le durcissement étant réalisé par séchage à une température de 90 à 105°C, puis par durcissement à une températuré de 400 à 700°C, le matériau non durci ayant une épaisseur d'au moins 0,5 mm et le matériau composite ayant une épaisseur totale de matériau de 2 à 4 mm, et dans lequel le premier matériau de renfort préformé est présent sous forme de fibres, de faisceaux de fibres, de tissus, de voiles de fibres, de mats de fibres, de treillis en fils métalliques, de feuilles perforées, de tôles ou de plaques, ou encore sous forme de fibres ou de morceaux de fils collés par un silicate de métal alcalin, ou encore sous des formes incurvées, pliées ou torsadées.

2. Matériau composite selon la revendication 1, caractérisé en ce que le silicate d'un métal alcalin est le silicate de sodium et/ou de potassium.

3. Matériau composite selon les revendications 1 ou 2, caractérisé en ce que la matière de charge minérale finement dispersée est l'oxyde d'aluminium, le dioxyde de silicium, le dioxyde de zirconium, le dioxyde de titane, le graphite, une boue rouge, la poudre de quartz, un ciment alumineux, le kaolin ou un de leurs mélanges, sa granulométrie étant de 1 à 30 µm.

4. Procédé de fabrication d'un matériau composite ayant une épaisseur totale de 2 à 4 mm, constitué d'un ou plusieurs matériaux de renfort préformés, pouvant être imprégnés, qui ensemble définissent la forme finale, euxmêmes constitués d'un matériau organique et/ou inorganique résistant à la traction, et d'un deuxième matériau durcissable, destiné à être appliqué sous forme d'une suspension, constitué d'un silicate d'un métal alcalin et d'une matière de charge minérale finement dispersée, caractérisé en ce que le premier matériau, qui a une épaisseur de 0,5 à 1 mm, est préformé puis éventuellement rendu rugueux, et est constitué de fibres, de faisceaux de fibres, de tissus, de voiles de fibres, de mats de fibres, de treillis de fils métalliques, de feuilles perforées, de tôles ou de plaques, puis, sur une face ou sur toutes les faces, est revêtu d'une suspension d'une solution aqueuse d'un silicate d'un métal alcalin et d'une matière de charge minérale finement dispersée et/ou en est imprégné, et est séché à des températures de 90 à 105°C, puis est durci à des températures de 400 à 700°C, avec formation d'un matériau durci ayant une épaisseur d'au moins 0,5 mm.

5. Procédé selon la revendication 4, caractérisé en ce que le matériau de renfort préformé est d'abord imprégné d'une solution silicate d'un métal alcalin et est séché à une température de 90 à 105°C, puis est imprégné de la suspension, séché à une température de 90 à 105°C et durci à une température de 400 à 700°C.

6. Procédé selon les revendications 4 ou 5, caractérisé en ce que la suspension contient de 90 à 10 % en poids d'une solution aqueuse d'un silicate d'un métal alcalin et de 10 à 90 % en poids d'une matière de charge minérale finement dispersée, la somme des pourcentages en poids étant de 100.

7. Procédé selon les revendications 4 à 6, caractérisé en ce qu'on utilise en tant que solution de silicate d'un métal alcalin une solution de silicate de sodium et/ou de potassium ayant une teneur en eau de 5 à 30 % en poids.

8. Procédé selon les revendications 4 à 7, caractérisé en ce la suspension contient en tant que matière de charge minérale finement dispersée de l'oxyde d'aluminium, du dioxyde de silicium, du dioxyde de zirconium, du dioxyde de titane, du graphite, une boue rouge, de la poudre de quartz, un ciment alumineux, du kaolin ou un de leurs mélanges, dont la granulométrie est comprise entre 1 et 30 µm.

9. Procédé selon les revendications 4 à 8, caractérisé en ce, pour obtenir des imprégnations ayant une épaisseur quelconque voulue, on répète une ou plusieurs fois l'imprégnation et le séchage.

10. Utilisation des matériaux composites selon les revendications 1 à 3 en tant qu'éléments de construction résistant au feu, résistant à la traction-flexion, et ayant une forme quelconque.
